(19) Europäisches Patentamt / European Patent Office / Office européen des brevets

(11) **EP 3 734 237 B1**

(12) **EUROPEAN PATENT SPECIFICATION**

(45) Date of publication and mention
of the grant of the patent:
**17.11.2021   Bulletin 2021/46**

(51) Int Cl.:
**G01F 23/00** *(2006.01)*

(21) Application number: **19172192.7**

(22) Date of filing: **02.05.2019**

(54) **SENSOR SYSTEM AND METHOD FOR MEASURING A FLUID LEVEL AND/ OR A FLUID QUALITY**

SENSORSYSTEM UND VERFAHREN ZUM MESSEN EINES FLÜSSIGKEITSSTANDES UND/ ODER EINER FLÜSSIGKEITSQUALITÄT

SYSTÈME DE CAPTEUR ET PROCÉDÉ DE MESURE D'UN NIVEAU DE FLUIDE ET/ OU D'UNE QUALITÉ DE FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2020   Bulletin 2020/45**

(73) Proprietor: **TE Connectivity Norge AS
5258 Blomsterdalen (NO)**

(72) Inventor: **AADLAND, Harald
5221 Nesttun (NO)**

(74) Representative: **Grünecker Patent- und
Rechtsanwälte
PartG mbB
Leopoldstraße 4
80802 München (DE)**

(56) References cited:
**EP-A1- 2 770 308          EP-A1- 2 937 537
WO-A1-2009/074428     DE-A1-102016 219 834
DE-B3-102011 089 703   US-A1- 2005 284 217**

**Description**

The present invention relates to a sensor system and to a method for measuring a fluid level and/or a fluid quality. For instance, such a sensor system can be used with a urea tank in a selective catalytic reduction (SCR) system for purification of harmful NOx components in the exhaust gases of diesel vehicles.

Fluid property sensors are widely used in vehicles, for example to sense the level of fluids like the fuel level in a fuel tank or more recently the level and/or quality of urea in a urea tank. This fluid, for example Diesel Exhaust Fluid (DEF) or Adblue™, trademark owned by the German Association of the Automobile Industry (VDA), is employed for reduction systems for reducing harmful NOx components in the exhaust gases of Diesel engines. To achieve an efficient reduction of NOx in exhaust gas, it is important to analyze the quality of the urea solution and its level inside the tank.

To realize a level measurement, conventional level sensing systems use for instance a bank of reed switches provided on a printed circuit board. These reed switches are aligned one besides the other and are positioned inside a tube, e. g. made of polypropylene or stainless steel. A magnetic float surrounds the tube and depending on its position on the urea solution will lead to the switching of a corresponding switch.

Besides the level measurement, further properties of the solution have to be sensed as well, e. g. the temperature, the concentration of the urea solution, or the presence of bubbles and the like.

The sensors are often integrated in a tube mounted to a connection head incorporated in the opening of the tank. The connection head typically contains openings for further tubes. First, a tube is needed to suck the fluid out of the tank to the place where it reacts with the NOx components. Second, a further tube is required to return fluid that has been sucked out but not been used for the reduction process back into the tank. Third, as urea freezes at -11 °C, a heating means is needed to heat urea in case of low ambient temperatures. The heating means usually has a heating coil comprising a single tube. This heating coil is usually connected to the cooling fluid circuit of the vehicle.

The tube for measuring the fluid level usually is fabricated from stainless steel, with its inner wall comprising a tube consisting of plastic such as polypropylene. The interior of the tube contains a printed circuit board (PCB) all along the length of the tube. The printed circuit is connected to a power line and ground of a vehicle, e. g. a truck, and via two wires to a CAN bus of the truck. The PCB comprises reed switches which interact with a magnetic ring-shaped float around the tube which has a perpendicular orientation, the float moving up and down with the fluid level. Via its magnetic field it interacts with the reed switches, which then give a signal to the CAN bus.

Sensors for further properties of the solution comprising a temperature sensor, as well as an ultrasound emitter and sensor for measuring the concentration and quality of urea, are typically located at the lower end of the fluid level sensor at the bottom of the tank. These sensors are. like the fluid level sensor, connected to the PCB, and, hence, to the power line, the ground, and the CAN bus of the truck.

An example of a conventional fluid property sensor is described in DE 20 2016 004 870 U1.

EP 2770308 A1 discloses an optoelectronic filling level sensor. The optoelectronic filling level sensor has a light transmitter for emitting a transmitted light beam in the direction of the medium and a light receiver for generating a received signal from the light reflected in the container. An evaluation unit is provided to identify a direct reflection on a surface of the medium by evaluating the distances to the measuring points or a container reflection on the container and to determine the filling level based on the direct reflection or the container reflection. This document further discloses a method for optical determination of a filling level of a medium in a container

WO 2009/074428 A1 relates to a device for measuring the filling level of a fluid in a container for storing the fluid, in particular a fluid for reducing nitrogen oxides in exhaust gases of internal combustion engines. Said device comprises an ultrasonic transducer for producing an ultrasonic signal and for capturing the ultrasonic signals reflected in the region of the liquid level. Deflection means are provided in the container for deflecting the ultrasonic signal.

EP 2937537 A1 relates to a sensor to measure a liquid, such as an urea solution. The sensor includes a light source operably coupled to a lumen disposed in a liquid solution, the light source configured to emit light and communicate the light to the lumen; a light detector operably coupled to the lumen, the light detector configured to receive at least a portion of the light from the lumen; and a controller configured to determine a concentration or quality of the liquid solution based on the light emitted by the light source and the portion of light received by the light detector.

US 2005/284217 A1 discloses a liquid level detecting apparatus, wherein a guide pipe is formed from a metal material, and its internal cross section has a circular shape whose diametric dimension gradually becomes smaller with a distance from an ultrasonic sensor. That is, the guide pipe is formed so that a route for transmitting an ultrasonic wave generated from the ultrasonic sensor may be tapered from this ultrasonic sensor toward a reflector plate. Thus, the acoustic pressure level of the ultrasonic wave which enters the reflector plate can be made higher than a value in a prior-art liquid level detecting apparatus. Accordingly, the energy of the ultrasonic wave generated from the ultrasonic sensor can be utilized for liquid level detection at a high efficiency, so that a fuel liquid level detecting apparatus capable of accurate liquid level detection can be provided.

DE 10 2011 089703 B3 discloses an optical measuring arrangement for determination of e.g. light speed within diesel fuel in motor car, has light sources whose light is incident at certain angle different from another angle and reflected to light sensors. The arrangement has a body made of a transparent material for light of a light source and comprising a boundary face. Another light source and/or a light sensor are provided such that an optical path is provided with the boundary face bordering on a receiving space between the latter light source and another light sensor or between the former light source and the former light sensor. The light of the light sources is incident at an angle, which is different from another angle. The light of the light sources is reflected to the light sensors. The receiving space is designed as a reservoir, a tank or a liquid line for a motor car. The transparent material is polymethyl methacrylate, acrylic glasses or Plexiglas.

DE 10 2016 219834 A1 relates to a method and device for monitoring the tank content of a storage tank of an exhaust-gas treatment system. Various embodiments include a method for monitoring the tank content of a storage tank comprising: metering a fluid from the tank into the exhaust gas tract, wherein the fluid has a concentration with respect to a reducing agent; acquiring a current concentration value for the reducing agent; calculating a change in concentration of the reducing agent on the basis of the current concentration value in comparison with a stored concentration value; determining a current operating state of the vehicle to identify an operating state in which refueling cannot be carried out; and carrying out a plausibility check of the calculated change in concentration if the calculated change in concentration exceeds a predetermined threshold value and the operating state is identified. The plausibility check includes acquiring the current tank filling level of the fluid.

However, such conventional sensor systems firstly have the disadvantage that the accuracy and robustness of the reed relay level sensor is often not satisfactory. Furthermore, the assembly of the reed relay level sensor is labor intensive and costly. Moreover, different sensor components have to be provided for measuring the fluid level and fluid quality at the same time.

Therefore, there is still a need to provide a fluid sensor system for instance for an SCR system, which provides accurate measurement results and which can be fabricated economically, at the same time being robust even in challenging application environments.

This object is solved by the subject matter of the independent claims. Advantageous embodiments of the present invention are the subject matter of the dependent claims.

The present invention is based on the idea that the speed of light travelling along a radiation path, which at least partly passes through the fluid to be analyzed, is influenced by the length of the path through the fluid as compared to the length of the path through a gas, e. g. air, on the one hand, and by the quality of the fluid on the other hand.

Generally, for a given wavelength of the radiation, the speed of light varies with the medium through which the light travels. The value of the speed of light is known for many solid, liquid, or gaseous materials. Materials that are light permeable (i. e. translucent or transparent) can be described by the speed of light as one of the characteristics of the particular material. If two light permeable materials are arranged in the path of the light, and the total light travel distance is known, as well as the individual speed of light for each of the two materials, it can be calculated what distance the light has traveled in each of the two materials, respectively.

Thus, by determining the speed of the light between an emitter and a receiver, it is possible to determine the level of the fluid and/or the quality of the fluid. The quality of the fluid may for instance comprise the concentration of urea in an Adblue™ solution. The emitter may for instance be a laser diode or a light emitting diode (LED). The receiver may accordingly be a photodiode or any other suitable radiation detector. For determining the level, the light is coupled into the fluid and reflected back out of the fluid towards the receiver.

In particular, the present invention relates to a sensor system for measuring a fluid level and/or a fluid quality, the sensor system comprising at least one light emitting unit that is arranged for emitting light in a first direction into a container for containing said fluid, at least one light receiving unit that is arranged for detecting said emitted light after it has passed a radiation path which is at least partly arranged in the container, at least one light reflecting unit that is arranged in the radiation path for reflecting said emitted light, and a control and evaluation unit, which is operable to calculate a speed of light of the light when passing the radiation path and to determine the fluid level and/or the fluid quality from the calculated speed of light.

This solution has the advantage that a broad spectrum of distances can be measured with high accuracy and reliability. Moreover, the sensitive electronic components do not necessarily have to come into contact with the aggressive fluid, the measurement based on the speed of light being an essentially contactless measurement technique. Furthermore, the optical measurement is not influenced by electromagnetic interference and is therefore much more accurate than reed relays.

According to the present invention, the sensor system comprises at least one light reflecting unit that is arranged in the radiation path for reflecting said emitted light. Such a reflecting unit may firstly serve the purpose of redirecting the path of the light to include angles, so that for instance a simultaneous measurement of the level and quality can be performed. Furthermore, reflectors can be used to extend the distance and thus the travel time of the light. Thereby, the accuracy of the measurement can be enhanced. The reflecting unit may advantageously comprise at least one reflector, which can be arranged inside the container.

Using at least one reflector (also called mirror in the following) allows a construction where the light emitting unit and the light receiving unit are integrated in a sensor unit that can be arranged at an orifice or a transparent window of the container. Such an integrated sensor unit (which may additionally also comprise further sensors, e. g. temperature sensors) has the advantage of being particularly compact and robust. When for instance using a container with a reflective bottom wall, the level of any transparent or translucent liquid can be measured with a sensor unit according to the present invention being attached to the opposing top wall.

In stationary tanks the liquid surface is flat and the light goes straight through the liquid and to the reflector and back. However, if the container is not stationary, the liquid will move and will not be always be flat and will cause an angle of refraction. To keep the distance to the reflector constant, a curved, e. g. spherical, reflector may be used for reflecting the light back to the receiver.

For use with an at least partly transparent container, the at least one reflecting unit may also comprise at least one reflector, which can be arranged at an outer wall of the container.

For simultaneously measuring the level of the liquid and the quality of the liquid, it is advantageous to construct the sensor system in a way that a defined section of the light path is arranged inside the container so that it does not cross the gas-liquid interface. To this end, the at least one reflecting unit may comprise a first reflector for deflecting the light in a direction across to the first direction.

Furthermore, in order to keep the distance between the emitter/receiver and the reflector constant and independent from the respective container, the sensor system may comprise a rod or a similar structure, to which the first reflector is fixed at a predetermined distance from the light emitting unit.

According to a further advantageous example, the at least one reflecting unit comprises a second reflector for reflecting the deflected light back to the first reflector. In this case, a predetermined section of the light path can be arranged inside the container, so that it does not cross the gas-liquid interface. This is in particular advantageous for measuring a liquid quality, such as the urea concentration in a urea tank.

In order to guarantee a constant and known distance between the first and the second reflector, the second reflector is mechanically connected to the first reflector via a spacer element.

If the sensor system is designed only to measure the quality of the fluid, it is not necessary that the light path crosses the gas-liquid interface at all. Instead, the light emitting unit may be connected to a light guiding element for guiding the emitted light to said first reflector without passing through the fluid. Such a construction is compatible to known sensor heads e. g. for DEF sensors as described above.

As already mentioned above, non-stationary fluid containers have the problem that the level is not always stably aligned with the emitter/receiver of the sensor. In particular, the emitted light may strike the fluid at an incident angle different from 90°, thereby causing problems with reflection. In order to ensure a reproducible and reliable coupling of the light into the fluid, the sensor system may further comprise an at least partly transparent float, wherein the radiation path passes through the float.

Although an advantage of the speed of light measurement can be seen in the contactless technology which allows to arrange the sensor elements outside the container, according to an advantageous embodiment, the light emitting unit is adapted to be arranged inside the container to be at least partly immersed in the fluid. In particular, the light emitting unit needs to be packaged in a watertight and fluid resistant housing that ensures that for instance aggressive fluids do not harm the optical and electronic components.

According to an advantageous example of the sensor system according to the present invention, the light emitting unit comprises a first light emitter and a second light emitter, and the light receiving unit comprises a first light receiver and a second light receiver, wherein the first light receiver is arranged to detect light emitted by the first light emitter, wherein the second light receiver is arranged to detect light emitted by the second light emitter, wherein a first radiation path leading from the first emitter to the first receiver leads through the container in order to measure the fluid level, and wherein a second radiation path leads through the container crossing the fluid surface and further leads along a predetermined distance without crossing the fluid surface. This particular arrangement allows an accurate and robust measurement of the level and the quality of a fluid at the same time. The construction is also compatible with known DEF sensor arrangements.

In a particularly cost effective and robust manner, such a set-up can be realized if the reflecting unit comprises a first reflector with a first mirror arranged opposite to the first emitter and the first receiver, and a second mirror that includes an angle with the light emitted from the second emitter, and a second reflector which is arranged at a fixed distance from the second mirror.

The present invention further relates to a corresponding method for measuring a fluid level and/or a fluid quality using a sensor system according to one of the preceding claims, the method comprising the following steps:

emitting light in a first direction into a container containing said fluid,

detecting said emitted light after it has passed a radiation path which is at least partly arranged in the container,

calculating a speed of light of the light when passing the radiation path, and

determining the fluid level and/or the fluid quality from the calculated speed of light.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. The described embodiments are merely possible configurations and it must be borne in mind that the individual features as described above can be provided independently of one another or can be omitted altogether while implementing this invention. Further features and advantages will become apparent from the following more particular description of the various embodiments of the invention, as illustrated in the accompanying drawings, in which like references refer to like elements, and wherein:

Fig. 1     shows a schematic sectional view of a fluid sensor system according to a first example;

Fig. 2     shows a schematic sectional view of a fluid sensor system according to a second example;

Fig. 3     shows a schematic sectional view of a fluid sensor system according to a further example;

Fig. 4     shows a schematic sectional view of a fluid sensor system according to a further example;

Fig. 5     shows a schematic sectional view of a fluid sensor system according to a further example;

Fig. 6     shows a schematic sectional view of a fluid sensor system according to a further example in an upright position;

Fig. 7     shows a schematic sectional view of a fluid sensor system according to a further example in a tilted position.

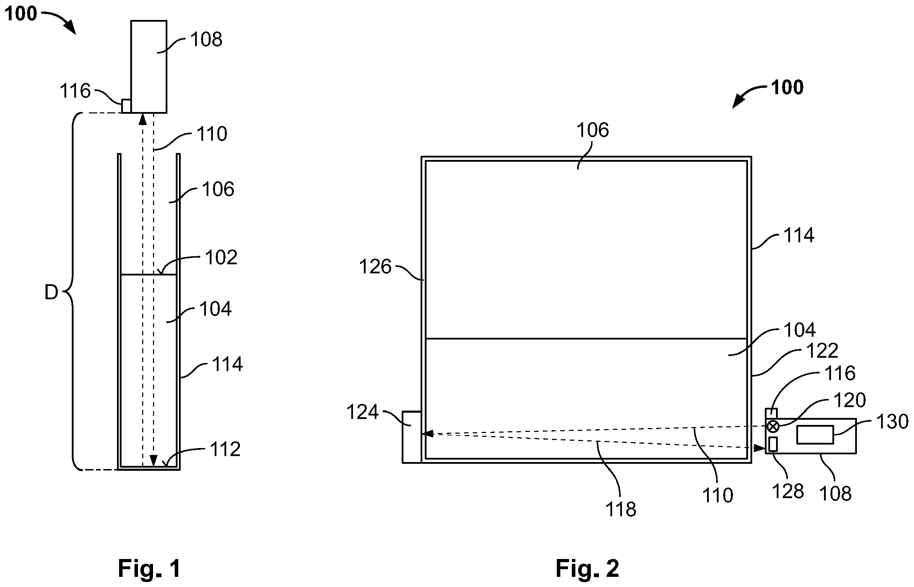

In the following, the present invention will be described in detail with reference to the Figures, first referring to Fig. 1. Fig. 1 shows a simplified representation of a sensor system 100 for measuring the level 102 of a liquid 104 contained in a container 114. It has to be noted that in the following description the terms "liquid" and "fluid" are used as synonyms. The fluid level 102 represents the interface between the fluid 104 and a gaseous material, for instance air 106.

The sensor system 100 comprises a sensor unit 108 which has a light emitting unit and as well as a light receiving unit (also referred to as "detector").

A light beam 110 is sent towards a light reflecting object, for instance a reflective wall 112 of the container 114, and the light is reflected back to a light detector located at a known location and distance D from the light emitter, for instance close to the light emitter. Generally, if two light permeable materials are arranged in the path of the light and the total light travel distance as well as the individual speed of light for the two materials is known, it can be established what distances the light has traveled in each of the two materials.

As this is known to a person skilled in the art, the speed of light is related to the refractive index of the material because the differences in the speed of light cause refraction. In particular, the actual speed of light can be calculated from the speed of light in vacuum by dividing the speed of light in vacuum c (c=300 000 km/s) by the refractive index.

Furthermore, the refractive index of air is approximately 1.00, so that the speed of light in air can be assumed as c/1.00 = 300 000 km/s. The refractive index of water is 1.33, so that the actual speed of light in water is c/1.33 = 225 000 km/s. The refractive index of DEF is 1.38, so that the speed of light in DEF is c/1.38 = 217 000 km/s.

The speed of light can be measured by a sensor system immersed in liquid. Increasing concentration of urea in water will reduce the speed of light and by knowing the relation of speed of light and concentration, the concentration can be calculated based on the measured speed of light. Other liquids and/or a mixture of concentration and quality can be measured by using this speed of light.

The sensor system can for instance be mounted at the tank or inside a tube connected to the actual tank.

It has to be noted that the travel time of the light is not evaluated using the reflection on the fluid surface, but using a reflector inside or behind the fluid. Consequently, the light needs to cross the interface 102 at an angle which is as close as possible to 90° in order to avoid unwanted reflections.

According to the present invention, the time from the instance the light is emitted until the instance when the reflected light is received is captured and used for calculating the level of the fluid. An increased number of reflectors can be used for extending the distance between the light emitter and the light receiver from the minimal length 2D (as shown in Fig. 1) to multiples of 2D for the level measurement; for the concentration measurement, the numbers of mirrors and distance between mirrors, transmitter and receiver are undefined. This improvement allows for a better accuracy.

Additionally, the temperature may be determined e. g. by arranging an infrared (IR) thermometer 116 close to or inside the sensor unit 108. As this is generally known to a person skilled in the art, such a contactless thermometer is based on detecting the heat radiation emitted by an object, in the present case the heat emitted by the fluid surface 102. Other means of detecting the temperature may of course also be employed.

On the other hand, according to the present invention, the measurement of the speed of light may also be used for assessing the quality of the fluid 104. For determining the quality of the fluid, as shown in Fig. 2, the complete radiation path 118 is located inside the fluid 104.

According to one possible implementation, the container 114 is at least partly transparent. Consequently, a light beam emitted 110 by a light emitter 120 passes through the wall 122 of the container 114 and reaches a reflector 124, which is arranged on the inside or outside of the other wall 126 of the container 114. The reflected light reaches a light receiver 128 inside the sensor unit 108. The time difference between sending out the light beam 110 and receiving the reflected light beam at the light receiver 128, is evaluated by a control unit 130. The control unit 130 may either be a part of the sensor unit 108 or may be a separate control device. By calibrating the sensor system 100 with a fluid of known characteristics, any deviation from these known characteristics can be detected.

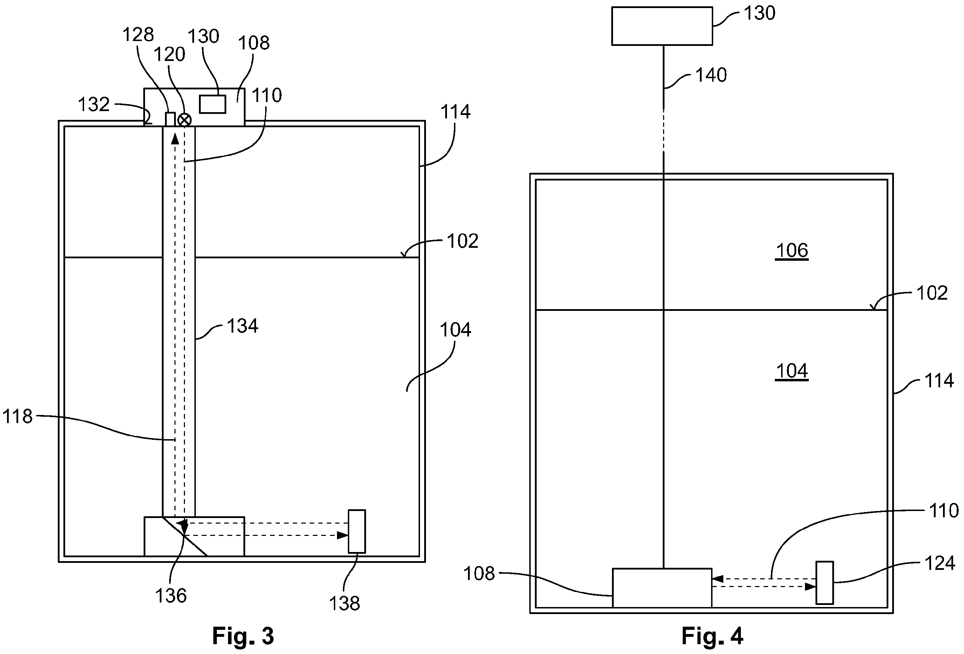

Fig. 3 shows a further advantageous embodiment of a quality sensor according to the present invention. The sensor system 100 may for instance be a urea sensor determining the urea concentration in a DEF. The urea sensor may for instance be a part of an SCR system and can be mounted at an orifice in the wall of a urea tank. As shown in Fig. 3, the sensor unit 108 may be attached at an orifice 132 of a urea tank forming the container 114.

As schematically illustrated in this drawing, the light emitter 120 transmits the light beam 110 through a sealed tubular shaft or an optical guide 134 which extends away from the sensor unit 108 into the container 114. In contrast to the previously shown embodiments, the light beam 110 is not coupled into the fluid 104 at the level 102 of the fluid 104. The radiation beam 110 impinges on an angled reflector 136 that is arranged at the end of the tubular shaft or optical guide 134. From there, the radiation is coupled into the fluid 104 and directed towards a second reflector 138.

The second reflector 138 has a predetermined distance from the first reflector 136. The radiation reflected by the second reflector 138 reaches again the first reflector 136 and is deflected into the tubular shaft or light guide 134. Accordingly, the radiation reaches the light receiver 128. As mentioned above, the sensor unit 108 comprises a control and evaluation unit 130 for calculating the quality of the fluid 104 from the detected speed of light along the radiation path 118 shown in Fig. 3. Consequently, this arrangement does not yield any information regarding the level 102 of the fluid 104 and is also not influenced by the level, provided there is enough fluid in the tank 114 for covering both reflectors 136, 138.

Alternatively, as shown in Fig. 4, the sensor unit 108 may also be located directly inside the fluid tank 114. An electrical connection 140 connects the sensor unit 108 with an external control and evaluation unit 130. The emitted radiation 110 is directed straight to a planar mirror 124 arranged at a predetermined distance from the light emitting surface of the sensor unit 108. Instead of an additional mirror 124, of course also the wall of the container 114 or any other suitable reflective surface may be used as a reflector.

The electrical connection 140 may not only transmit signals to and from the sensor unit 108, but may also provide the necessary power supply for the sensor unit 108. It is clear for a person skilled in the art, that the electrical connection 140 may of course also be a wireless connection.

The electrical connection 140 may also comprise one or more optical fibers, then the sensor unit 108 is not needed or will be an integrated part of the external control and evaluation unit 130.

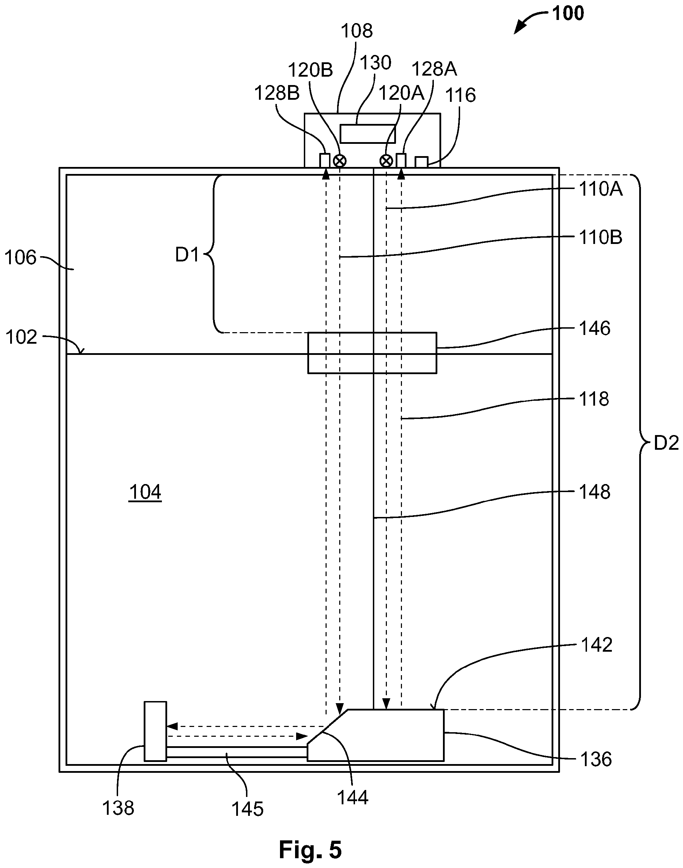

A sensor system 100 for combined fluid level and quality measurement will now be explained with reference to Fig. 5. As shown in this Figure, the sensor system 100 comprises a sensor unit 108 which has two light emitters 120A, 120B. The radiation beam 110A, which is emitted by the first radiation emitter 120A, is reflected by a planar mirror 142 arranged at a first reflector unit 136. A first light receiver 128A detects the reflected radiation.

Furthermore, the sensor unit 108 comprises a second light emitter 120B which emits radiation 110B towards an angled mirror 144 which is also part of the first reflector 136. The radiation emitted by the second light emitter 120A is deflected by the angled reflector 144 towards a second reflector 138, thereby passing along a predetermined distance through the fluid 104. The radiation which is reflected by the second reflector 138 again is deflected by the angled reflector 144 towards a second light receiver 128B. The distance between the angled reflector 144 and the second reflector 138 is fixed by a spacer 145.

The control and evaluation unit 130 may now evaluate the time, which the light emitted by the first emitter 120A needs to arrive at the first received 128A, and the time, which the light emitted by the second emitter 120B needs to arrive at the second receiver 128B, to derive two speed of light values. Then, the control and evaluation unit 130 calculates the difference between these two light speed values. From this difference, the quality of the fluid 104 can be extracted. On the other hand, the signal retrieved from the receiver 128A taken alone contains the information about the position of the level 102. Furthermore, an IR temperature sensor 116 can be provided to measure the temperature in order to perform a temperature adjustment of the measurement values.

Optionally, as shown in Fig. 5, the sensor system 100 may further comprise an at least partly transparent float 146. The float 146 runs along a shaft 148 and its surface is always at a right angle with reference to the light beams 110A, 110B. Consequently, the transparent float 146 improves the coupling of the light beams 110A, 110B into the fluid 104, if the fluid level 102 is not exactly at right angles to the emission direction of the sensor unit 108. In particular for non-stationary containers 114 (for instance in a vehicle) this is a significant advantage. The speed of light and the distance through the float is known and compensated for in the level calculation.

The actual evaluation using the transparent float 146 may be performed as follows. The distance D1 is assumed from the top of the tank to a reference point on the float 146, the distance D2 signifies the distance from the top of the tank to the reflector at the bottom of the tank. Along the variable distance D1, the speed of light is measured only in air 106, whereas along the distance D2, the speed of light is measured through air 106 and liquid 104. From the value of D1, the level 102 can be derived. Moreover, D2 is a known constant geometric value. By measuring the speed of light along the distance D2, an average value is measured in air and fluid from which the measurement of the speed of light only measured up to a reference point on the float 146 can be subtracted, thus yielding the value for the distance D1.

When knowing the distance D1, the level of the liquid can be derived. From the actual speed of light in the liquid, the concentration of the urea can be calculated, for instance using previously stored calibration values.

For instance, the concentration may be calculated as follows:

$$\text{Distance D2} - \text{Distance D1} = \text{Liquid distance}$$

$$\text{Time of light to the float} = \text{speed of light in air} * \text{distance to float}$$

$$\text{Time of light in liquid} = \text{total time of light distance 2} - \text{Time of light to the float}$$

$$\text{Speed of light in the liquid} = \text{Liquid distance} / \text{Time of light in the liquid}$$

$$\text{Refractive index measured} = \text{Speed of light in air} / \text{speed of light in liquid}$$

Refractive index air 1.00 => c/1.00 = 300 000 km/s
Refractive index water 1.33 => c/1.33 = 225 000 km/s
Refractive index DEF 1.38 => c/1.38 = 217 000 km/s

Consequently, the concentration can be calculated using the following equation:

$$Concentration = \frac{Refractive\ index\ measured - refractive\ index\ Water}{Refractive\ index\ DEF - Refractive\ index\ Water} \cdot 32.5$$

This formula is analogously also valid for other liquids and mixtures, using the respective other refractive indices.

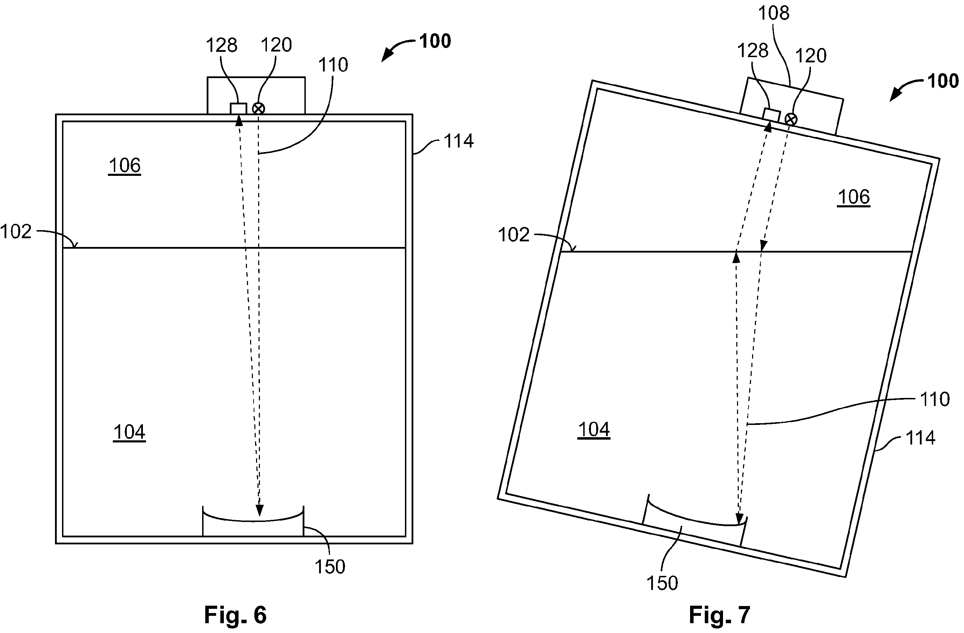

A further possibility of dealing with the tilting level 102 in a non-stationary container 114 will now be explained with reference to Fig. 6 and 7. as schematically depicted in these figures, the sensor system 100 comprises a curved reflector 150 for ensuring that the light beam 110 is always reflected back towards the light receiver 128 off the sensor unit 108, even if the surface 102 of the fluid 104 is tilted with respect to the direction of the emitted light beam as being sent from the emitter 120. In particular, the curved reflector 150 preferably comprises a concave spherical mirror.

In summary, the present innovation is based on the idea to measure the speed of light and use the result for determining the level of a liquid, concentration of a mixture or both. The speed of light can be used for e. g. determining the level and concentration of urea in deionized water. The measurement principles are general for all liquids where light can be sent through. The speed of light is related to the material is transmitted through, and all gases, liquid and solids have their own speed of light. The refractive index is based on speed of light. In particular, the speed of light is analog with the refractive index. The refractive index is one of the parameters defining the concentration of urea in deionized water that is within the limits for DEF. This measurement is using a part of the standard as metering principle. In a mixture of two components or liquids with known refractive indexes (speed of light), the ratio between these two components can be established by measuring the speed of light and then calculating the mixture ratio of the two components.

## REFERENCE NUMERALS

| Reference Numeral | Description |
| --- | --- |
| 100 | Sensor system |
| 102 | Fluid level |
| 104 | Fluid |
| 106 | Air/gas |
| 108 | Sensor unit |
| 110 | Light beam |
| 112 | Reflective wall |
| 114 | Container |
| 116 | Thermometer |
| 118 | Radiation path |
| 120 | Light emitter |
| 122 | First wall of the container |
| 124 | Reflector |
| 126 | Second wall of the container |
| 128 | Light receiver |
| 130 | Control and evaluation unit |
| 132 | Orifice of the container |
| 134 | Tubular shaft or optical guide |
| 136 | First reflector |
| 138 | Second reflector |
| 140 | Electrical connection/optical fibres |
| 142 | Planar mirror |
| 144 | Angled mirror |
| 145 | Spacer |
| 146 | Float |
| 148 | Shaft, rod |
| 150 | Curved reflector |

## Claims

1. Sensor system for measuring a fluid level and a fluid quality, the sensor system (100) comprising:

at least one light emitting unit (120) that is arranged for emitting light in a first direction into a container (114) containing said fluid (104),
at least one light receiving unit (128) that is arranged for detecting said emitted light after it has passed a radiation path (118) which is at least partly arranged in the container (114),
at least one light reflecting unit (112, 124) that is arranged in the radiation path (118) for reflecting said emitted light, and
a control and evaluation unit (130), which is operable to calculate a speed of light of the light when passing the radiation path and to determine the fluid level and the fluid quality from the calculated speed of light, wherein the light emitting unit comprises a first light emitter (120A) and a second light emitter (120B), and wherein the light receiving unit comprises a first light receiver (128A) and a second light receiver (128B), and wherein the first light receiver (128A) is arranged to detect light emitted by the first light emitter (120A), wherein the second light receiver (128B) is arranged to detect light emitted by the second light emitter (120B), wherein a first radiation path leading from the first emitter to the first receiver leads through the container in order to measure the fluid level, and wherein a second radiation path leading from the second emitter to the second receiver leads through the container crossing the fluid surface and further leads along a predetermined distance without crossing the fluid surface (102).

2. Sensor system according to claim 1, wherein the light emitting unit (120) and the light receiving unit (128) are integrated in a sensor unit (108) that can be arranged at an orifice (132) or a transparent window of the container (114).

3. Sensor system according to claim 1 or 2, wherein the at least one reflecting unit (124) comprises at least one reflector, which is adapted to be arranged inside the container.

4. Sensor system according to one of the preceding claims, wherein the at least one reflecting unit comprises a first reflector (136) for deflecting the light in a direction across to the first direction.

5. Sensor system according to one of the preceding claims, further comprising a rod (148), to which the first reflector (136) is fixed at a predetermined distance from the light emitting unit (120).

6. Sensor system according to claim 4 or 5, wherein the at least one reflecting unit comprises a second reflector (138) for reflecting the deflected light back to the first reflector (136).

7. Sensor system according to claim 6, wherein the second reflector (138) is mechanically connected to the first reflector via a spacer element (145).

8. Sensor system according to one of the preceding claims, further comprising an at least partly transparent float (146), wherein the radiation path (118) passes through the float (146).

9. Sensor system according to one of the preceding claims, wherein the light emitting unit (120) is adapted to be arranged inside the container (114) to be at least partly immersed in the fluid (104).

10. Sensor system according to one of the preceding claims, wherein the reflecting unit comprises:

   a first reflector with a first mirror (142) arranged opposite to the first emitter and the first receiver, and a second mirror (144) that includes an angle with the light emitted from the second emitter, and
   a second reflector (138) which is arranged at a fixed distance from the second mirror (144).

11. Method for measuring a fluid level and a fluid quality using a sensor system (100) according to one of the preceding claims, the method comprising the following steps:

   emitting light in a first direction into a container (114) containing said fluid (104),
   detecting said emitted light after it has passed a radiation path (118) which is at least partly arranged in the container,
   calculating a speed of light of the light when passing the radiation path, and
   determining the fluid level and the fluid quality from the calculated speed of light.

**Patentansprüche**

1. Sensor-System zum Messen eines Flüssigkeits-Pegels und einer Flüssigkeits-Qualität, wobei das Sensor-System (100) umfasst:

   wenigstens eine Licht emittierende Einheit (120), die so eingerichtet ist, dass sie Licht in einer ersten Richtung in einen Behälter (114) hinein emittiert, der das Fluid (104) enthält,
   wenigstens eine Licht empfangende Einheit (128), die so eingerichtet ist, dass sie das emittierte Licht erfasst, nachdem es einen Strahlungsweg (118) durchlaufen hat, der wenigstens teilweise in dem Behälter (114) angeordnet ist,

wenigstens eine Licht reflektierende Einheit (112, 124), die auf dem Strahlungsweg (118) angeordnet ist, um das emittierte Licht zu reflektieren, sowie

eine Steuerungs-und-Bewertungs-Einheit (130), die betrieben werden kann, um eine Lichtgeschwindigkeit des Lichts beim Durchlaufen des Strahlungsweges zu berechnen und anhand der berechneten Lichtgeschwindigkeit den Flüssigkeits-Pegel und die Flüssigkeits-Qualität zu bestimmen,

wobei die Licht emittierende Einheit eine erste Licht-Emissionseinrichtung (120A) und eine zweite Licht-Emissionseinrichtung (120B) umfasst und die Licht empfangende Einheit eine erste Licht-Empfangseinrichtung (128A) sowie eine zweite Licht-Empfangseinrichtung (128B) umfasst, und

die erste Licht-Empfangseinrichtung (128A) so eingerichtet ist, dass sie von der ersten Licht-Emissionseinrichtung (120A) emittiertes Licht erfasst die zweite Licht-Empfangseinrichtung (128B) so eingerichtet ist, dass sie von der zweiten Licht emittierenden Einrichtung (120B) emittiertes Licht erfasst, wobei ein erster Strahlungsweg, der von der ersten Emissionseinrichtung zu der ersten Empfangseinrichtung führt, zum Messen des Flüssigkeits-Pegels durch den Behälter führt, und ein zweiter Strahlungsweg, der von der zweiten Emissionseinrichtung zu der zweiten Empfangseinrichtung führt, durch den Behälter führt und dabei die Flüssigkeitsoberfläche kreuzt, und weiter über eine vorgegebene Strecke führt, ohne die Flüssigkeitsoberfläche (102) zu kreuzen.

2. Sensor-System nach Anspruch 1, wobei die Licht emittierende Einheit (120) und die Licht empfangende Einheit (128) in eine Sensor-Einheit (108) integriert sind, die an einer Öffnung (132) oder einem transparenten Fenster des Behälters (114) angeordnet sein kann.

3. Sensor-System nach Anspruch 1 oder 2, wobei die wenigstens eine reflektierende Einheit (124) wenigstens einen Reflektor umfasst, der zum Anordnen im Inneren des Behälters eingerichtet ist.

4. Sensor-System nach einem der vorangehenden Ansprüche, wobei die wenigstens eine reflektierende Einheit einen ersten Reflektor (136) zum Ablenken des Lichts in einer Richtung quer zu der ersten Richtung umfasst.

5. Sensor-System nach einem der vorangehenden Ansprüche, das des Weiteren eine Stange (148) umfasst, an der der erste Reflektor (136) in einem vorgegebenen Abstand zu der lichtemittierenden Einheit (120) befestigt ist.

6. Sensor-System nach Anspruch 4 oder 5, wobei die wenigstens eine reflektierende Einheit einen zweiten Reflektor (138) umfasst, mit dem das abgelenkte Licht zu dem ersten Reflektor (136) zurück reflektiert wird.

7. Sensor-System nach Anspruch 6, wobei der zweite Reflektor (138) über ein Abstandshalter-Element (145) mechanisch mit dem ersten Reflektor verbunden ist.

8. Sensor-System nach einem der vorangehenden Ansprüche, das des Weiteren einen wenigstens teilweise transparenten Schwimmer (146) umfasst, wobei der Strahlungsweg (118) durch den Schwimmer (146) hindurch verläuft.

9. Sensor-System nach einem der vorangehenden Ansprüche, wobei die Licht emittierende Einheit (120) so eingerichtet ist, dass sie innerhalb des Behälters (114) so angeordnet ist, dass sie wenigstens teilweise in die Flüssigkeit (104) eingetaucht ist.

10. Sensor-System nach einem der vorangehenden Ansprüche, wobei die reflektierende Einheit umfasst:

einen ersten Reflektor mit einem ersten Spiegel (142), der der ersten Emissionseinrichtung und der ersten Empfangseinrichtung gegenüberliegend angeordnet ist, sowie einen zweiten Spiegel (144), der mit dem von der zweiten Emissionseinrichtung emittierten Licht einen Winkel einschließt, und

einen zweiten Reflektor (138), der in einem festen Abstand zu dem zweiten Spiegel (144) angeordnet ist.

11. Verfahren zum Messen eines Flüssigkeits-Pegels und einer Flüssigkeits-Qualität unter Verwendung eines Sensor-Systems (100) nach einem der vorangehenden Ansprüche, wobei das Verfahren die folgenden Schritte umfasst:

Emittieren von Licht in einer ersten Richtung in einen Behälter (114) hinein, der die Flüssigkeit (104) enthält,

Erfassen des emittierten Lichts, nachdem es einen Strahlungsweg (118) durchlaufen hat, der wenigstens teilweise in dem Behälter angeordnet ist,

Berechnen einer Lichtgeschwindigkeit des Lichts beim Durchlaufen des Strahlungsweges, und

**EP 3 734 237 B1**

Bestimmen des Flüssigkeits-Pegels sowie der Flüssigkeits-Qualität anhand der berechneten Lichtgeschwindigkeit.

**Revendications**

1. Système de capteur pour mesurer un niveau de fluide et une qualité de fluide, le système de capteur (100) comprenant:

   au moins une unité d'émission de lumière (120) qui est agencée pour émettre de la lumière dans une première direction dans un récipient (114) contenant ledit fluide (104),
   au moins une unité de réception de lumière (128) qui est agencée pour détecter ladite lumière émise après qu'elle a traversé un trajet de rayonnement (118) qui est au moins partiellement agencé dans le conteneur (114),
   au moins une unité de réflexion de la lumière (112, 124) qui est disposée dans le trajet du rayonnement (118) pour réfléchir ladite lumière émise, et
   une unité de commande et d'évaluation (130), qui est utilisable pour calculer une vitesse de lumière de la lumière lorsqu'elle passe par le trajet de rayonnement et pour déterminer le niveau de fluide et la qualité de fluide à partir de la vitesse de lumière calculée,
   dans lequel l'unité d'émission de lumière comprend un premier émetteur de lumière (120A) et un second émetteur de lumière (120B), et dans lequel l'unité de réception de lumière comprend un premier récepteur de lumière (128A) et un second récepteur de lumière (128B), et
   dans lequel le premier récepteur de lumière (128A) est agencé pour détecter la lumière émise par le premier émetteur de lumière (120A), dans lequel le second récepteur de lumière (128B) est agencé pour détecter la lumière émise par le second émetteur de lumière (120B), dans lequel un premier trajet de rayonnement menant du premier émetteur au premier récepteur conduit à travers le récipient afin de mesurer le niveau de fluide, et dans lequel un second trajet de rayonnement menant du second émetteur au second récepteur conduit à travers le récipient en traversant la surface du fluide et conduit en outre le long d'une distance prédéterminée sans traverser la surface du fluide (102).

2. Système de capteur selon la revendication 1, dans lequel l'unité d'émission de lumière (120) et l'unité de réception de lumière (128) sont intégrées dans une unité de capteur (108) qui peut être disposée au niveau d'un orifice (132) ou d'une fenêtre transparente du récipient (114).

3. Système de détection selon les revendications 1 ou 2, dans lequel la au moins une unité de réflexion (124) comprend au moins un réflecteur, qui est conçu pour être disposé à l'intérieur du récipient.

4. Système de détection selon l'une des revendications précédentes, dans lequel ladite au moins une unité de réflexion comprend un premier réflecteur (136) pour dévier la lumière dans une direction transversale à la première direction.

5. Système de détection selon l'une des revendications précédentes, comprenant en outre une tige (148), à laquelle le premier réflecteur (136) est fixé à une distance prédéterminée de l'unité d'émission de lumière (120).

6. Système de capteur selon les revendications 4 ou 5, dans lequel la au moins une unité de réflexion comprend un second réflecteur (138) pour réfléchir la lumière déviée vers le premier réflecteur (136).

7. Système de capteur selon la revendication 6, dans lequel le second réflecteur (138) est relié mécaniquement au premier réflecteur par l'intermédiaire d'un élément d'écartement (145).

8. Système de capteur selon l'une des revendications précédentes, comprenant en outre un flotteur (146) au moins partiellement transparent, dans lequel le trajet de rayonnement (118) passe par le flotteur (146).

9. Système de détection selon l'une des revendications précédentes, dans lequel l'unité d'émission de lumière (120) est conçue pour être disposée à l'intérieur du récipient (114) pour être au moins partiellement immergée dans le fluide (104).

10. Système de détection selon l'une des revendications précédentes, dans lequel l'unité de réflexion comprend:

   un premier réflecteur avec un premier miroir (142) disposé en face du premier émetteur et du premier récepteur, et un second miroir (144) qui fait un angle avec la lumière émise par le second émetteur, et
un second réflecteur (138) qui est disposé à une distance fixe du second miroir (144).

11. Procédé de mesure d'un niveau de fluide et d'une qualité de fluide à l'aide d'un système de capteurs (100) selon l'une des revendications précédentes, le procédé comprenant les étapes suivantes:

émettre de la lumière dans une première direction dans un récipient (114) contenant ledit fluide (104),
détecter ladite lumière émise après qu'elle a traversé un trajet de rayonnement (118) qui est au moins partiellement disposé dans le récipient,
calculer une vitesse de lumière de la lumière lorsqu'elle passe par le chemin de rayonnement, et déterminer le niveau du fluide et la qualité du fluide à partir de la vitesse de lumière calculée.

**Fig. 2**

**Fig. 1**

**Fig. 3**

**Fig. 4**

EP 3 734 237 B1

**Fig. 5**

**Fig. 6**

**Fig. 7**

EP 3 734 237 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 202016004870 U1
- EP 2770308 A1
- WO 2009074428 A1
- EP 2937537 A1
- US 2005284217 A1
- DE 102011089703 B3
- DE 102016219834 A1